# FASCICULE DE BREVET EUROPEEN

(11) **EP 1 602 143 B1**
(45) Date de publication et mention de la délivrance du brevet: **08.07.2009**
(21) Numéro de dépôt: 04706112.2
(22) Date de dépôt: 29.01.2004
(51) Int. Cl.: H01M 10/40

(54) **GENERATEUR ELECTROCHIMIQUE RECHARGEABLE**
WIEDERAUFLADBARER ELEKTROCHEMISCHER AKKU
RECHARGEABLE ELECTROCHEMICAL ACCUMULATOR

(30) Priorité: 30.01.2003 CA 2418257
(43) Date de publication de la demande: 07.12.2005
(73) Titulaire: HYDRO-QUEBEC, Montréal, Québec H2Z 1A4 (CA)
(72) Inventeur: ZAGHIB, Karim, Longueuil, Québec J4M 2M7 (CA); PERRIER, Michel, Montréal, Québec H1T 3H8 (CA); GUERFI, Abdelbast, Brossard, Québec J4X 1W2 (CA); DUPUIS, Elizabeth, McMasterville, Québec J3G 1E6 (CA); CHAREST, Patrick, Ste-Julie, Québec J3E 1P2 (CA)
(74) Mandataire: Sueur, Yvette
(86) Numéro de dépôt international: PCT/CA2004/000129
(87) Numéro de publication internationale: WO 2004/068610

(56) Documents cités:
- EP-A- 0 994 143
- EP-A- 1 123 948
- EP-A- 1 164 654
- EP-A- 1 213 778
- US-A- 5 011 501
- US-A1- 2001 004 506
- US-A1- 2002 015 894
- US-B1- 6 190 804

## Description

### DOMAINE DE L'INVENTION

La présente invention a pour objet un générateur électrochimique rechargeable au lithium métallique comportant au moins une électrode de type lithium métallique et au moins un électrolyte polymère gel.

L'invention a également pour objet un procédé de préparation de ce générateur et l'utilisation de celui-ci notamment comme source de courant dans des véhicules hybrides électriques, des véhicules électriques ou des UPS.

### BRÈVE DESCRIPTION DE L'ART ANTÉRIEUR

Il est connu d'utiliser du lithium métallique dans des batteries primaires à base de MnO₂ comme cathode. Ces batteries sont utilisées dans le domaine de l'électronique, par exemple dans les montres comme back up de mémoire. À cause de la formation de dendrites de lithium, ces batteries ne sont pas rechargeables. Ce phénomène indésirable semble causé par l'utilisation d'électrolytes liquides, associée à cette technologie.

Une technologie connue sous le nom de ACEP a été développée par Hydro-Québec pour tenter de résoudre le problème de formation de dendrites. Cette technologie qui utilise un polymère sec a toutefois seulement partiellement résolu ce problème. En effet, le fonctionnement normal de cette technologie reste à des températures supérieures à 60° Celsius.

Le brevet US-A-6.190.804 au nom de Dai-Ichi Kogyo Seiyaku Co. décrit des générateurs électrochimiques comportant un électrolyte solide. L'électrolyte solide est obtenu en dissolvant un composé tétrafonctionnel de formule spécifique et à haut poids moléculaire avec un sel électrolytique dans un solvant, puis en réalisant la réticulation de la solution. Les générateurs préparés selon la technologie décrite dans ce brevet présentent l'inconvénient de ne fonctionner qu'à des températures dites chaudes.

Le brevet US-A-6.517.590 au nom d'Hydro-Québec décrit l'utilisation d'agents lubrifiants pour améliorer les performances au niveau de l'étape de laminage du film constitutif de l'électrode et au niveau du film recouvrant l'anode. Les générateurs décrits dans ce document présentent cependant également une limitation en ce qui concerne leur utilisation à de basses températures.

La demande internationale WO 03/063 287 au nom d'Hydro-Québec décrit un électrolyte polymère qui peut être sous forme de gel et qui présente une stabilité électrochimique supérieure à 4 Volts lorsque l'on l'utilise comme électrolyte pour des supercondensateurs hybrides et pour des générateurs électrochimiques. Les générateurs au lithium correspondants présentent cependant des limitations lors de la recharge de la batterie, on assiste alors à la formation de dendrites de lithium.

Il existe donc un besoin pour de nouveaux générateurs rechargeables dépourvus des inconvénients habituellement associés aux systèmes électrochimiques de l'art antérieur.

Il existe également un besoin pour des générateurs rechargeables, présentant une durée de vie prolongée, et stables même dans des conditions d'utilisation inhabituelles telles que des températures inférieures à 60° Celsius et pouvant même être aussi basses que - 20° Celsius.

### RÉSUMÉ DE L'INVENTION

La présente invention répond aux besoins ci-dessus évoqués en fournissant un générateur électrochimique rechargeable au lithium métallique comportant au moins une électrode de type lithium métallique et au moins un électrolyte polymère gel. Ce générateur est capable d'opérer à des températures comprises entre - 20 et 60 ° Celsius, substantiellement sans formation de dendrites de lithium sur la surface totale d'électrode de type lithium métallique. Il se caractérise aussi par une durée de vie remarquable même en utilisation intensive à basse température.

Le générateur selon l'invention est donc très stable en fonctionnement et présente une durée de vie particulièrement longue, associée notamment à la quasi absence de formation de dendrites de lithium même dans des conditions d'utilisation défavorables telles que de nombreux cyclages réalisés à de basses températures, inférieures à 60° Celsius.

Ce nouveau générateur rechargeable peut être obtenu par mise en oeuvre d'un procédé de fabrication impliquant notamment un contrôle des températures appliquées dans des étapes spécifiques de la fabrication.

En raison de son niveau très élevé de performances électrochimiques, en particulier de sa stabilité remarquable, ce générateur est utilisable dans de nouveaux domaines d'application tels que les véhicules hybrides, les véhicules électriques et les systèmes d'alimentation d'urgence, par exemple ceux de type UPS. En fait, ce nouveau générateur est utilisable dans tout type d'application et ce même en plein air dans des régions froides.

L'invention ainsi que ses avantages ressortiront mieux à la lecture de la description détaillée et non restrictive qui suit, faite en se référant aux dessins annexés.

### BRÈVE DESCRIPTION DES DESSINS

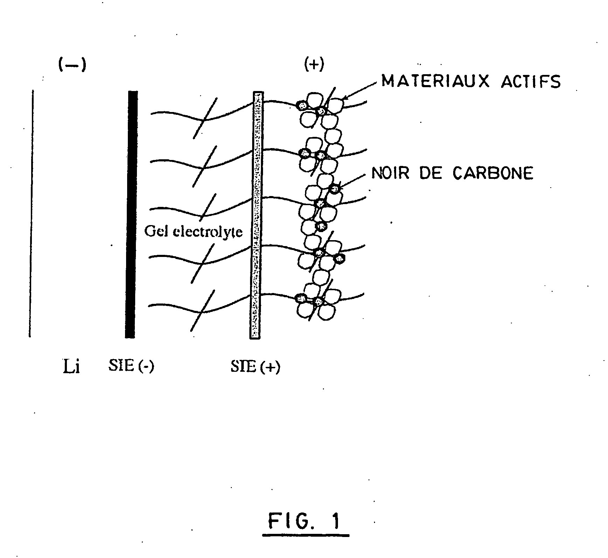

La Figure 1 est un schéma représentant la structure interne d'un générateur rechargeable selon l'invention comportant trois films de base incluant un film d'anode à base de lithium, un film séparateur et un film de cathode, le générateur comprenant aussi un film de passivation SEI (Solid Electrolyte Interface) formé à la surface du film à base du lithium et à la surface du film de la cathode après laminage par réticulation d'une composition électrolytique.

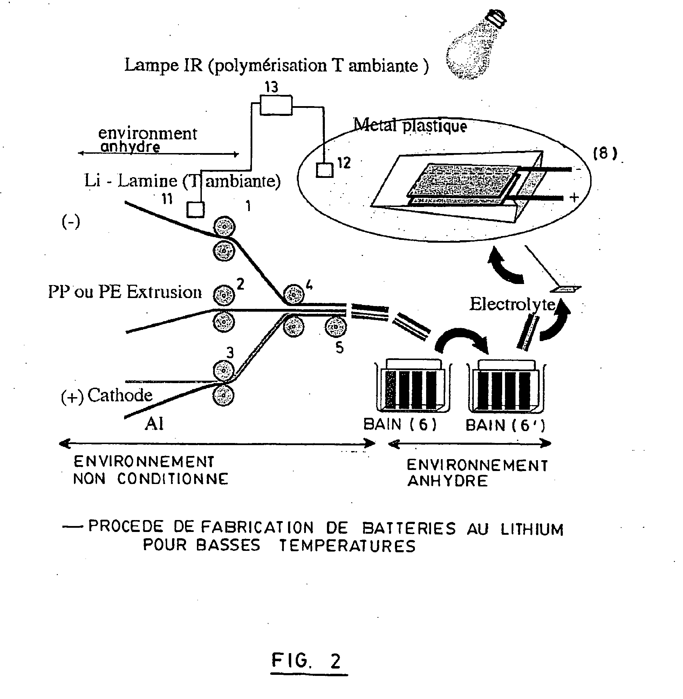

La Figure 2 est un schéma illustrant un mode de mise en oeuvre d'un procédé de fabrication d'une batterie au lithium selon l'invention dans lequel du lithium métallique extrudé et/ou laminé est utilisé avec ou sans collecteur de courant.

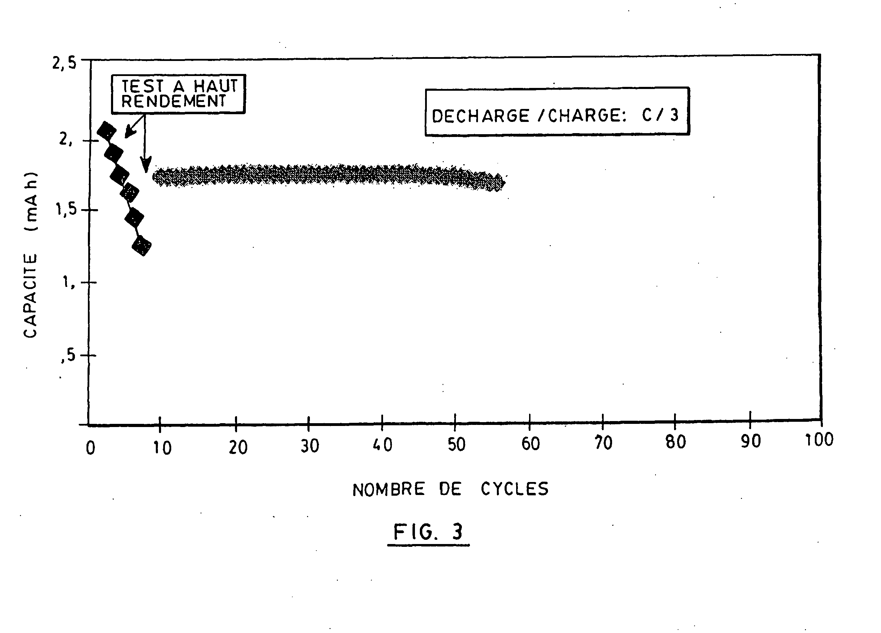

La Figure 3 est une courbe de cyclage d'une batterie préparée selon l'invention, illustrant la stabilité de l'interface lithium métal obtenue avec un polymère gel préparé par mise en oeuvre d'un procédé selon l'invention et testé dans un générateur rechargeable fabriqué tel que décrit dans l'exemple 1 ci-après.

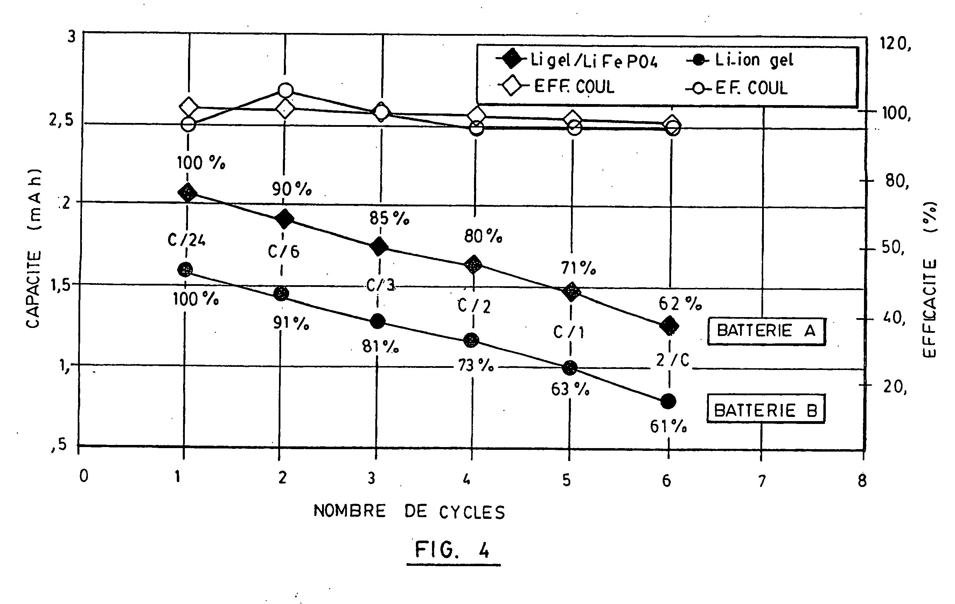

La Figure 4 est une courbe de cyclage comparant les décharges à haut régime d'une batterie rechargeable au lithium métal avec celles d'une batterie lithium-ion utilisant un électrolyte polymère gel, la préparation des composants de cette batterie étant décrite dans l'exemple 2 ci-après.

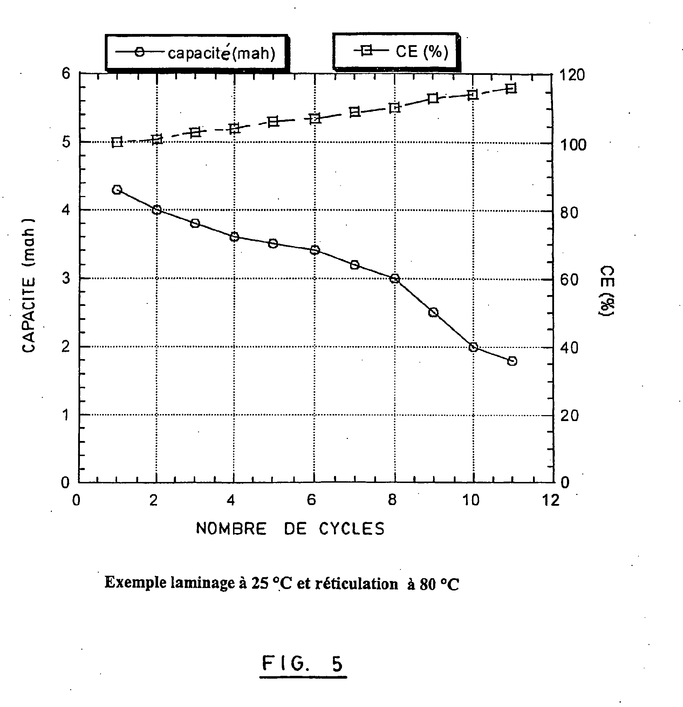

La Figure 5 est une courbe de cyclage d'un générateur électrochimique rechargeable préparé selon le procédé de l'invention ci-après décrit dans l'exemple 3, si ce n'est que la température de réticulation du mélange polymère réticulable/plastifiant/sel de lithium est supérieure à la température de préparation par laminage du film de lithium métallique.

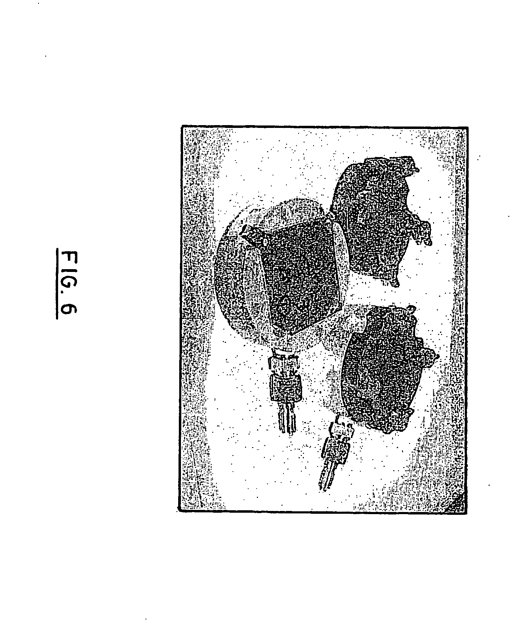

La Figure 6 et est une photographie de deux dispositifs de pression (press-cells) fabriqués par la société Hydro-Québec, un de ces dispositifs étant montré sous forme assemblé, l'autre sous forme démonté avec une batterie à tester positionnée à l'intérieur d'un de ses couvercles. Ces dispositifs permettent de contrôler la pression dynamique exercée sur une batterie placée à l'intérieur du dispositif, dans l'emplacement prévu à cet effet. Tel qu'il est illustré, ils sont chacun composés de deux couvercles emboîtables qui sont solidarisés à l'aide de quatre systèmes vis écrous. Lorsque le dispositif est assemblé, le piston qui traverse l'un des couvercles exerce une pression sur la batterie testée, le déplacement du piston étant assuré par une arrivée d'air.

### DESCRIPTION DÉTAILLÉE DE L'INVENTION

Dans le cadre de la présente invention, on entend par « électrolyte polymère gel » une masse visco-élastique formée à partir d'une suspension colloïdale qui comporte au moins un polymère réticulable, au moins un solvant plastifiant et au moins un sel de lithium. Le taux de réticulation du ou des polymères réticulables présent(s) dans le gel est habituellement compris entre 5 et 40 %, à température ambiante.

Dans le cadre de la présente invention, on entend par « solvant plastifiant d'un polymère réticulable » un composé organique ou un mélange de composés organiques capable de solubiliser le polymère réticulable et d'améliorer la plasticité de l'électrolyte polymère gel obtenu par réticulation de ce polymère réticulable, en mélange avec le solvant plastifiant et avec un sel ionique. L'étape de réticulation est réalisée substantiellement sans évaporation du solvant plastifiant. Le solvant plastifiant a également pour finalité d'améliorer la conductivité ionique de l'électrolyte polymère gel obtenu, et ce, en particulier à basse température d'utilisation.

**Un premier objet** de la présente invention réside dans un générateur électrochimique rechargeable au lithium métallique comportant au moins une électrode de type lithium métallique et au moins un électrolyte polymère gel, tel que revendiqué dans la revendication 1 ce générateur étant susceptible d'opérer substantiellement sans formation de dendrites sur la surface totale d'électrode de type lithium métallique présente dans ledit générateur.

Ce générateur est caractérisé par le fait qu'il est susceptible d'opérer, à des températures comprises entre - 20 et 60° Celsius, substantiellement sans formation de dendrites de lithium sur la surface totale d'électrode de type lithium métallique.

De préférence, ce générateur rechargeable est conçu de façon à ce que après 100 cyclages, la formation de dendrites de lithium se fait seulement sur moins de 1 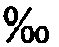 de la surface totale d'électrode de type lithium métallique.

On évalue la stabilité du générateur par rapport aux dendrites en calculant l'évolution de l'efficacité coulombique du générateur au cours des cycles. Pour ce faire, on alterne les tests de charge et de décharge. On considère qu'il n'y a pas formation de dendrite s lorsque l'efficacité coulombique reste comprise entre 90 et 100 %. Lorsque cette efficacité chute au dessous de 90 %, il y apparition de phénomènes parasites au niveau de la structure des générateurs. Lorsque l'efficacité coulombique dépasse 100 %, il y a des dendrites qui se sont formées et on procède alors à la mesure des surfaces contaminées. La surface recouverte de dendrites est quantifiée en utilisant un microscope électronique à balayage.

De préférence aussi, le générateur rechargeable selon l'invention est conçu de façon à présenter une stabilité telle au cyclage, après 200 cycles, que les dendrites de lithium formées occupent moins de 1% de la surface totale d'électrode de type lithium métallique.

Le générateur comporte au moins trois films. Le premier film constitue une électrode positive. Le deuxième film à base de lithium métallique constitue une électrode négative, alors que le troisième film joue le rôle de séparateur entre l'électrode positive et l'électrode négative.

Dans ce générateur, le film qui constitue l'électrode positive est avantageusement constitué par un film de LiFePO₄, LiCoO₂, LiNiO₂, Li₄Ti₅O₁₂ ou d'un mélange de ces derniers. Plus avantageusement encore on retiendra les électrodes positives dont le film est réalisé à partir d'un mélange d'au moins deux des composés LiCoO₂, LiNiO₂, LiFePO₄ et Li₄Ti₅O₁₂.

L'électrode négative à base de lithium est constituée de préférence d'un film de lithium métallique et/ou d'un mélange d'alliage intermétallique riche en lithium tel qu'un mélange lithium-aluminium, lithium acier, lithium-Sn et lithium-Pb. À titre d'exemples, on peut citer les mélanges d'alliages intermétalliques riches en lithium qui comportent environ 8 % d'aluminium.

Le séparateur est quant à lui avantageusement constitué d'un film choisi dans le groupe constitué par les films de types polyéthylène, polypropylène, polyéther et polyéthyléne/polypropylène.

De préférence encore, le générateur électrochimique rechargeable selon de l'invention est conçu pour opérer entre 1,5 et 5 Volts. Le voltage de fonctionnement est fonction du matériau utilisé par exemple avec LiFePO₄ il est de l'ordre de 3,5 Volts, avec LiCoO₂ de l'ordre de 3,7 Volts, avec Li₄Ti₅O₁₂ de l'ordre de 1.5 Volts et avec LiNiO₂ de l'ordre de 3,8 Volts.

Selon l'invention, un électrolyte polymère gel occupe non seulement les cavités qui existent à l'intérieur du générateur entre les électrodes et le séparateur, mais également les porosités qui existent à l'intérieur des électrodes et du séparateur.

Cet électrolyte polymère gel est obtenu par réticulation d'une composition électrochimique constituée d'au moins une partie du ou des polymère(s) réticulable(s) présent(s) dans un mélange polymère réticulable/solvant plastifiant/sel de lithium. La réticulation est mise en oeuvre avec ou sans auxiliaires de réticulation, de préférence *in situ,* après constitution du générateur électrochimique rechargeable. En pratique, le polymère réticulable utilisé se trouve avantageusement sous forme solide ou liquide et le sel de lithium se trouve avantageusement sous forme solide, comme par exemple sous forme d'une poudre.

Le solvant plastifiant sous forme liquide a quant à lui notamment pour fonction de dissoudre le polymère réticulable, et d'augmenter la conductivité électrochimique de l'électrolyte polymère gel, ainsi que sa plasticité.

Selon une variante avantageuse, la réticulation de la composition électrochimique est réalisée en présence d'au moins un additif, de nature organique et/ou inorganique, susceptible d'améliorer les caractéristiques mécaniques telles, que la tenue mécanique du séparateur entre les électrodes et/ou la sécurité des systèmes électrochimiques dans lesquels l'électrolytique polymère gel est présent.

De préférence le polymère réticulable est choisi dans le groupe des polymères réticulables à quatre branches. Ce polymère réticulable est alors présent seul ou en combinaison avec un autre composant de nature polymérique ou non polymérique.

Dans ce dernier cas, le polymère réticulable à quatre branches possède de préférence des terminaisons hybrides. Parmi les terminaisons hybrides envisagées on peut mentionner les terminaisons hybrides acrylates (de préférence méthacrylate) et alkoxy (de préférence les groupements alkoxy avec de 1 à 8 atomes de carbone, plus préférentiellement encore les groupements méthoxy ou éthoxy), ou encore vinyl. Une branche au moins du polymère à quatre branches, et de préférence au moins deux branches des polymères retenus sont susceptibles de donner lieu à une réticulation.

De tels polymères à quatre branches sont décrits de façon extensive dans le brevet US-6.190.804 ainsi que dans la demande internationale WO 03/063 287.

Le polymère réticulable peut être avantageusement associé à au moins un composant choisi dans les familles suivantes :
- des poly(vinylyldiènefluoride), aussi appelés (PVDF), de formule chimique (CH₂-CF₂)ₙ, dans laquelle n varie avantageusement entre 150 et 15.000, préférentiellement n est supérieur à 1.500 et inférieur à 4.000, plus préférentiellement encore n est voisin de 2.300. Parmi ces polymères, on préfère ceux ayant un poids moléculaire moyen compris entre 10.000 et 1 million, plus préférentiellement encore ceux ayant un poids moléculaire moyen compris entre 100.000 et 250.000;
- des copolymères poly(vinylydiène fluoro-co-hexafluoropropène), de formule ((CH₂-CF₂)ₓ(CF₂-CF(CF₃))₁₋ₓ]ₙ aussi appelés (PVDF-HFP), dans laquelle n varie de 150 à 15.000, de préférence n varie de 1.500 à 4.000, plus préférentiellement encore n est voisin de 2.300 et x varie de préférence entre 0,92 et 0,85. Parmi ces polymères, on préfère ceux ayant un poids moléculaire moyen compris entre 10.000 et 1 million, plus préférentiellement encore ceux ayant un poids moléculaire moyen compris entre 100.000 et 250.000;
- des poly(tetrafluoroethylène), aussi appelés (PTFE), de formule chimique (CF₂-CF₂)ₙ, dans laquelle n varie de 5 à 20.000, de préférence avec n variant de 50 à 10.000. Parmi ces polymères on préfère ceux ayant un poids moléculaire moyen compris entre 500 et 5 millions, plus préférentiellement encore ceux ayant un poids moléculaire moyen compris entre 5.000 et 1.000.000, de préférence d'environ 200.000;
- des poly(éthylène-co-propylène-co-5-methylène-2-norbomène) ou des copolymères éthylène propylène-diène, aussi appelés EPDM, de préférence ceux ayant un poids moléculaire moyen compris entre 10.000 et 250.000, plus préférentiellement compris entre 20.000 et 100.000;
- des polyols tels que :
   - l'alcool polyvinylique avec un poids moléculaire moyen qui est de préférence compris entre 50.000 et 1 million, ou une cellulose, de préférence d'un poids moléculaire moyen compris entre 5.000 et 250.000 dont une partie des groupements OH est remplacée par des groupements OCH₃, OC₂H₅, OCH₄OH, OCH₂CH(CH₃)OH, OC(=O)CH₃, ou OC(=O)C₂H₅, et/ou
   - les produits de condensation de l'oxyde d'éthylène, de préférence ceux ayant un poids moléculaire moyen compris entre 1.000 et 5.000, de préférence pur ou en mélange avec de l'oxyde de propylène sur du glycérol ou du triméthylolpropane, et éventuellement réticulés par un diou tri-isocyanate de formule (O=C=N)ₓ-R avec 2<x<4 et R représentant un groupement aryl ou alkyl assurant la polyfonctionnalité avec le groupe (O=C=N)ₓ;
- des poly(méthylinétacrylate) aussi appelés (PMMA), de formule [(CH₂-C(CH₃)/(CO₂CH₃)]ₙ, dans laquelle n varie de préférence entre 100 et 10.000, plus préférentiellement encore avec n variant de 500 à 5.000. Parmi ces polymères on préfère ceux ayant un poids moléculaire moyen compris entre 10.000 et 1 million, plus préférentiellement encore ceux ayant un poids moléculaire moyen compris entre 50.000 et 500.000;
- des poly(acrylonitrile), aussi appelés (PAN), de formule chimique [CH₂-CH(CN)]ₙ avec n variant de 150 à 18.800, plus préférentiellement encore avec n variant de 300 à 4.000. Parmi ces polymères, on préfère ceux ayant un poids moléculaire moyen compris entre 10.000 et 1 million, plus préférentiellement encore ceux ayant un poids moléculaire moyen compris entre 20.000 et 200.000;
- des oxydes de SiO₂-Al₂O₃; et
- des particules de nano TiO₂ enrobées ou non d'une matière organique qui est de préférence compatible, c'est à dire stable et/ou ne générant aucune réaction secondaire parasite.

Les critères qui rentrent en compte dans l'optimisation du choix de l'électrolyte polymère gel utilisée dans le cadre de la présente invention sont:
- une faible pression vapeur;
- une bonne compatibilité avec le lithium métallique;
- une bonne compatibilité avec les additifs de type céramique, verre, inorganique et/ou organique ajoutés de préférence avant réticulation;
- une bonne conductivité ionique; et
- une large fenêtre électrochimique de fonctionnement qui se situe avantageusement de 0 à 5 Volts.

Le rapport plastifiant/polymère à quatre branches, exprimé en poids, varie de préférence dans les rapports 95/5 à 5/95. La quantité de l'initiateur exprimée par rapport à la quantité de polymère réticulable représente de 100 à 5.000 ppm, de préférence de 500 à 1.500 ppm d'initiateur.

On notera que la conductivité ionique de l'électrolyte polymère gel varie en fonction du rapport plastifiant/polymère réticulable. La sécurité de la batterie est aussi fonction de ce rapport.

Selon un mode avantageux de réalisation, la quantité de polymère réticulable représente entre 1 et 95 %, préférentiellement entre 5 et 50 %, plus préférentiellement encore environ 10 % en poids de la quantité de la composition électrolytique soumise à réticulation.

Le sel de lithium utilisé pour préparer l'électrolyte polymère gel est avantageusement de type LiBF₄, LiPF₆, LiTFSI, LiBETI, LIFSI ou est un mélange d'au moins deux de ces derniers. Plus préférentiellement encore, le sel de lithium est choisi dans le groupe constitué par LiTFSI, LiFSI et les mélanges de LiTFSI et de LiFSI.

Le sel de lithium présent dans la solution électrolytique liquide représente une quantité molaire de 0,5 à 2,5, de préférence de 1 à 1,7 par rapport à la quantité de plastifiant.

Le solvant plastifiant utilisé pour préparer l'électrolyte polymère gel est, à titre illustratif, choisi dans le groupe constitué par la gamma-buturolactone (γ-BL), la tetrasulfonoamine (TESA), le carbonate de propylène (PC), le carbonate d'éthylène (EC) et les mélanges de ces derniers.

Le solvant plastifiant peut également être constitué d'un mélange, comme par exemple un mélange d'au moins deux solvants choisis dans le groupe constitué par la γ-BL, la TESA, le PC et le EC.

Le solvant plastifiant peut aussi être choisi dans les mélanges ternaires du groupe constitué par γ-BL + EC + PC, γ -BL +EC , γ -BL +PC , TESA+PC et γ-BL + TESA + PC + EC, par exemple dans un ratio (3 :1 :1).

Selon un mode particulièrement avantageux, l'électrolyte polymère gel est constitué en poids :
- d'environ 10 % du polymère à quatre branches ERM-1 ELEXCEL^{™} commercialisé par DKS; et
- d'environ 90 % de 1,5 Molaire de LiTFSi dans (EC + γ-BL) ratio (1 :3).

Le générateur électrochimique de l'invention peut avantageusement comporter au moins un agent réticulant ajouté au mélange polymère réticulable/solvant plastifiant/sel de lithium. Cet additif est de nature organique et/ou inorganique et il est choisi de façon à améliorer les caractéristiques mécaniques du générateur, telles que la tenue mécanique du séparateur entre les électrodes et/ou la sécurité en fonctionnement du générateur. À titre illustratif de tel additif, on peut citer les oxydes de titane, les oxydes d'aluminium et les mélanges d'au moins deux de ces oxydes. De tels additifs sont habituellement présents dans la composition réticulable à moins de 10 %, et de préférence à moins de 5 % en poids.

Selon une variante de l'invention, la réticulation du polymère réticulable est conduite en présence d'un agent réticulant, choisi de préférence dans le groupe des peroxycarbonates. Plus particulièrement, la réticulation est conduite en présence de benzoyl peroxyde. L'agent réticulant est alors présent à raison de 500 à 5.000 ppm / polymère, de préférence à raison de 1.000 à 3.000 ppm, plus préférentiellement encore à raison d'environ 2.000 ppm.

La réticulation des polymères réticulables est réalisée à une température comprise entre 20 et 90° Celsius, de préférence entre 45 et 80° Celsius, plus préférentiellement encore à température ambiante.

Afin d'obtenir un électrolyte polymère ayant la consistance désirée de gel, la réticulation du polymère réticulable est avantageusement réalisée pendant une durée qui est comprise entre 15 minutes et 72 heures, préférentiellement comprise entre 1 et 48 heures, plus préférentiellement encore d'environ 24 heures.

La réticulation peut être réalisée à l'aide de diverses sources énergétiques. Par exemple, par mise en oeuvre d'une irradiation par un faisceau d'électrons, par ultra violet, par rayonnement infrarouge ou thermique, ou par la mise en oeuvre d'au moins deux de ces techniques.

De façon avantageuse, on utilise un émetteur infrarouge ou une source thermique. On peut également réaliser avec succès la réticulation par faisceau électronique et sans utiliser d'agent de réticulation.

La réalisation de la réticulation par infrarouge génère un échauffement de la composition électrolytique et permet en particulier d'obtenir un film de passivation du lithium stable, en particulier lors du cyclage de la batterie.

Un **deuxième objet** de la présente invention réside dans le procédé permettant de préparer le générateur électrochimique rechargeable à haute stabilité défini précédemment, tel que revendiqué dans la revendication 11.

Ce procédé comporte une étape de formation d'un film de lithium métallique et/ou d'un film d'un mélange d'alliage intermétallique riche en lithium par laminage ou par extrusion. Le film ainsi obtenu joue dans le générateur le rôle d'électrode négative. La technique d'extrusion seule, avec les réglages nécessaires au niveau des dimensions de l'extrudat sortant de la filière, permet aussi de fournir un film d'électrode adapté.

Ce procédé comporte une étape préliminaire au cours de laquelle le lithium métallique et/ou le mélange d'alliage intermétallique riche en lithium, initialement sous forme solide tels que blocs, barres, granules.... , est extrudé avant d'être soumis à laminage. Il est par ailleurs avantageusement mis en oeuvre dans une enceinte anhydre et/ou en présence de préférence d'un gaz rare comme l'argon.

Ce procédé comporte donc une étape de dépôt par laminage d'un film de lithium métallique et/ou un film d'un mélange d'alliage intermétallique riche en lithium, de préférence sans support mais optionnellement sur un support d'électrode avantageusement à base de nickel, avec formation, au cours du laminage, d'une couche de passivation sur le film de lithium.

Les techniques d'extrusion et de laminage utilisables sont décrites dans le brevet américain US-A-6.517.590.

Il est important que laminage du film de lithium soit réalisé à une température sensiblement identique à celle utilisée pour l'extrusion préliminaire du lithium.

Le procédé selon l'invention permet de préparer un générateur électrochimique rechargeable stable au lithium métallique et qui comporte :
- au moins une électrode de type lithium métallique recouverte d'un film à base de lithium, ledit film de lithium étant déposé sur l'électrode par laminage avec formation, au cours du laminage, d'une couche de passivation sur le film de lithium;
- au moins une cathode; et
- au moins un électrolyte polymère gel.

La stabilité et la remarquable durée de vie de ce générateur proviennent du fait qu'il opère substantiellement sans formation de dendrites de lithium sur la surface totale d'électrode de type lithium métallique présente dans les générateurs.

Plus particulièrement ce générateur qui comporte une électrode à base de lithium, faite d'un film de lithium métallique et/ou d'un mélange d'alliage intermétallique riche en lithium, opère substantiellement sans formation de dendrites à des températures de fonctionnement comprises entre - 20 et 60° Celsius.

Le film de lithium et/ou d'un mélange d'alliage intermétallique riche en lithium est avantageusement préparé à partir de l'extrudât (masse sortant de la filière de l'extrudeuse) obtenu par extrusion de lithium ou et/ou d'un mélange d'alliage intermétallique riche en lithium sous forme solide.

De préférence le procédé selon l'invention est mis en oeuvre en milieu anhydre et/ou en présence d'un gaz rare.

Avantageusement, les températures de laminage et d'extrusion sont maintenues sensiblement constantes pendant les étapes d'extrusion et de laminage.

Selon une variante avantageuse, l'extrusion de lithium métallique et/ou d'un mélange d'alliage intermétallique riche en lithium est réalisée à une température comprise entre 50 et 100° Celsius et le laminage est réalisé à une température variant de 5 à 80° Celsius.

Une caractéristique importante du procédé selon l'invention réside dans le fait que l'étape de laminage et celle de réticulation sont réalisées sensiblement à la même température.

Dans le cas ou seul la technique d'extrusion est considérée pour la formation du film de type lithium, on ajuste les températures de sortie d'extrusion et celle de réticulation de façon qu'elles soient sensiblement les mêmes. À titre illustratif, les températures mesurées à la sortie de l'extrusion d'un sel de lithium peuvent se situer entre 70 et 80 °Celsius.

De façon préférentielle, l'écart de température de réalisation des étapes de laminage et de réticulation est inférieur ou égal à 2° Celsius. Plus préférentiellement encore, cet écart est inférieur ou égal à 1° Celsius.

L'ectrolyte polymère gel utilisé est obtenu par réticulation d'un mélange réticulable comportant au moins un polymère réticulable, au moins un solvant plastifiant et au moins un sel de lithium. La réticulation du polymère réticulable est réalisée après assemblage des parties constitutives du générateur et après le remplissage de ses cavités par la composition réticulable.

La réticulation est avantageusement de type IR ou thermique et elle est, de préférence, réalisée en exerçant une pression sur les parois externes et/ou sur les interfaces internes du générateur en vue d'améliorer la soudure des interfaces internes. Elle varie avantageusement de 689 Pa à 517.10³ Pa (0,1 PSI à 75 PSI)

Selon une autre variante particulièrement avantageuse, le procédé de préparation d'un générateur électrochimique rechargeable selon l'invention comporte au moins les trois étapes de préparation, à savoir :
- la préparation d'un premier film de lithium à partir de lithium et/ou d'un mélange d'alliage intermétallique riche en lithium sous forme solide par extrusion puis par laminage ou seulement par extrusion;
- la préparation d'un deuxième film appliqué sur un support d'électrode pour former la cathode; et éventuellement
- d'un troisième film séparateur par laminage ou par Doctor Blade^{™} sur un support.

Il est à noter que lors de la mise en oeuvre du procédé, les trois films sont préparés l'un après l'autre, dans un ordre indifférent, ou simultanément. Il est possible de procéder de façon continu ou discontinue.

**Un troisième objet** de la présente invention réside dans l'utilisation du générateur électrochimique rechargeable ci-dessus décrit ou tel que préparé selon le procédé également ci-dessus décrit, comme source de courant dans les véhicules hybrides électriques, dans les véhicules électriques ou dans les sources d'alimentation d'urgence, par exemple de type UPS.

À titre d'exemple d'utilisation on peut mentionner, l'implantation en plein air et l'utilisation à des températures inférieures à 0 ° Celsius.

### DESCRIPTION D'UN MODE DE RÉALISATION PRÉFÉRENTIEL DE L'INVENTION

Un exemple de préparation de la matrice polymère par réticulation du polymère utilisé comme électrolyte dans une batterie ayant une anode à base de lithium métallique est ci-après donné. La technologie associée à ce nouveau type de batteries est fonctionnelle à basse température, en particulier à des températures allant de - 20 à 60° Celsius.

Le procédé de préparation de l'électrolyte polymère gel à partir de la composition électrolytique comporte au moins les deux étapes, à savoir :
1. la préparation de la composition électrolytique; et
2. la réticulation de la composition électrolytique.
   Parmi les paramètres influençant la préparation de l'électrolyte polymère, on peut mentionner :
3. la nature de la source de réticulation;
4. la nature des additifs et leurs effets sur l'élimination des dendrites; et
5. le choix de l'étape du procédé de fabrication des générateurs au cours de laquelle la réticulation du polymère réticulable est réalisée, *in situ* lors du montage final de la batterie.

### 1 - Préparation de la composition électrolytique

Dans l'exemple donné, la composition électrolytique est préparée à l'aide d'au moins un polymère réticulable et d'au moins un plastifiant liquide capable de faire augmenter la conductivité ionique avec assistance d'au moins un sel ou d'au moins un mélange de sels choisi de préférence parmi:
- LiTFSI ou LiFSI;
- un mélange de LiTFSI et de LiFSI; ou
- un mélange de LiBF₄ et de LiTFSI.

Il s'est avéré que le choix de l'électrolyte liquide est très important pour la formation, de façon intime, d'un gel chimique et physique.

Parmi les électrolytes liquides conseillés, on peut mentionner ceux qui présentent les caractéristiques suivantes:
- une bonne conductivité à basse température (BT), c'est-à-dire à des températures inférieures à 25° Celsius et supérieures à 0 °Celsius;
- un point d'ébullition élevé c'est-à-dire préférentiellement supérieur à 200° Celsius;
- l'aptitude à former un film de passivation sur le lithium métallique, stable à haute densité de courant;
- une faible tension de vapeur, c'est-à-dire de préférence inférieure à 50 mm de Hg à 120 °Celsius; et
- une fenêtre électrochimique de 0 à 5 Volts.

Parmi les plastifiants avantageusement utilisés dans ce contexte, on mentionne la GAMMA-BL, le PC, l'EC et leurs mélanges avec au moins un polymère réticulable.

### 2 - Réticulation de la composition électrolyte

Cette procédure est particulièrement importante pour l'obtention d'un électrolyte polymère gel présentant une très bonne tenue mécanique, ce qui s'est avéré assurer une très bonne interface entre le lithium et l'électrolyte polymère gel, ainsi qu'entre l'électrolyte polymère gel et la cathode. À cet effet, différentes méthodes de réticulation ont été utilisées avec succès.

Il a par ailleurs été constaté de façon inattendue qu'un générateur électrochimique particulièrement stable est obtenu lorsque la température de réticulation est sensiblement la même que la température à laquelle le laminage est réalisé. Il apparaît que cette précaution permet d'éviter l'endommagement du film de passivation du lithium qui se produit normalement et qui résulte dans la formation de dendrites, phénomène correspondant à la formation de couches de Li₂O et le Li₂CO₃.

Les quatre techniques suivantes sont avantageusement utilisées pour réaliser la réticulation, à savoir l'exposition:
a) à un faisceau d'électrons;
b) à un rayonnement ultra violet;
c) à un rayonnement infrarouge généré de préférence par une source optique puis converti *in situ* en source thermique; et
d) à une source thermique non optique.

Les deux derniers procédés (c,d) se sont révélés les plus avantageux. Ces procédés de réticulation peuvent être appliqués au polymère réticulable dans les étapes de préparation de la composition électrolytique mais il est préférable de les appliquer *in situ* dans le générateur après son assemblage.

De façon surprenante, la réticulation donne un pouvoir physique et mécanique au séparateur (électrolyte). On empêche aussi le lithium de former des dendrites lors du cyclage de la batterie, en particulier sur la surface fragile constituée par les joints de grain à la surface du lithium métallique.

### 3 - Nature de la source de la réticulation

Les caractéristiques opérationnelles des sources de réticulation mentionnées dans la partie ci-dessus 2 ci-dessus sont préférentiellement:

### a) Pour une irradiation par faisceau d'électrons

Lorsque le séparateur d'électrolyte est formé à partir d'une membrane de polymère réticulable, la gamme de dose de réticulation est préférentiellement de 5 Mrad à 20 Mrad, de préférence d'environ 5 Mrad. L'électrolyte liquide est introduit dans la membrane de polymère et la conductivité ionique est assurée par le mélange polymère - plastifiant liquide. Dans ce cas, il n'est pas nécessaire d'utiliser un séparateur comme PP ou PE ou leur mélange. En effet, la membrane polymère joue le rôle de séparateur et d'électrolyte en même temps.

### b) Réticulation par UV

La mise en oeuvre de ce procédé est similaire à celle décrite au point 3 a) précédent, à la différence près que l'on ajoute en plus 10.000 à 50.000 ppm d'un photo initiateur (1%-5% en poids/polymère) dans le polymère pour assurer la réticulation, après introduction de ce dernier dans le mélange polymère réticulable - plastifiant. La source d'irradiation UV est en contact direct avec le polymère.

### c) Réticulation par IR

Cette technique peut être appliquée directement ou indirectement sur le polymère réticulable, ce qui n'est pas le cas dans les techniques évoquées dans les parties 3 a) et 3 b). L'électrolyte polymère gel est obtenu après un mélange intime du polymère avec l'électrolyte liquide et avec l'initiateur. Ce mélange est alors injecté dans la partie poreuse du séparateur PP ou PE. La réticulation est assurée par une lampe Infra Rouge opérant à une température comprise entre 25 et 80° Celsius, de préférence pendant 24 heures ou bien à 80°Celsius pendant une heure, plus préférentiellement encore à 25°Celsius pendant 24 heures. Dans le cas de la réticulation indirecte, l'injection du mélange (polymère, électrolyte liquide, initiateur) se fait lors de la fabrication de la batterie. Dans ce cas, l'électrolyte occupe également l'espace poreux (porosité) de la cathode et le joint de grain du lithium. Ce type de réticulation est assuré en maintenant la batterie sous pression afin d'obtenir une très bonne interface entre le lithium, l'électrolyte et l'électrolyte/cathode.

### d) Réticulation thermique

Ce procédé de réticulation est équivalent à celui de la partie 3c) à la différence que la source de chaleur n'est pas optique.

### 4. Nature des additifs et leur effet sur l'élimination des dendrites

L'utilisation combinée d'une source de réticulation et d'additifs de type TiO₂ , Al₂O₃ ou SiO₂ permet d'améliorer les propriétés mécaniques et de conductivité ionique de l'interface électrolyte/lithium.

La réticulation par IR ou thermique en présence de TriO₂, Al₂O₃ ou SiO₂ est utilisée dans le procédé de fabrication de l'électrolyte à basse température. Les expériences réalisées ont mis, de façon surprenante, en évidence le rôle important de ces additifs, susceptibles d'augmenter la tenu mécanique de l'électrolyte gel, en soudant les interfaces lithium électrolyte gel et cathode/électrolyte gel. L'avantage supplémentaire constaté réside dans le fait que cela assure une bonne sécurité de la batterie, en particulier lors d'un survoltage.

Par ailleurs d'autres paramètres influençant favorablement la conductivité de l'électrolyte et la résistance interfaciale de la batterie au lithium ont été mis en évidence. Ainsi, parmi les paramètres qui permettent d'obtenir en même temps une très bonne conductivité de l'électrolyte gel et une résistance interfaciale basse, on peut signaler la nature du sel avantageusement de type LiFSi ou LiTFSi et sa concentration dans l'électrolyte polymère gel, ainsi que la nature du plastifiant présent de préférence à raison de 0,5 à 2,5 Moles dans le mélange plastifiant/polymère réticulable.

Il est également à noter que la conductivité ionique du gel dépend de la nature du sel et de sa concentration, du choix de l'électrolyte liquide et du rapport polymère/électrolyte liquide.

La concentration du sel est ainsi avantageusement choisie de préférence entre 1 et 2 moles et le sel est préférentiellement dissout dans un solvant du groupe γ-BL, γ-BL+ EC et γ-BL+ PC. Le pourcentage polymère réticulable/plastifiant est quand à lui avantageusement de 10/90 % en poids.

Une faible résistance interfaciale initiale est obtenue avec γ-BL et une forte résistance interfaciale est obtenue avec γ-BL+ PC, de plus la relation suivante est vérifiée pour les résistances interfaciales γ-BL< γ-BL+ EC < γ-BL+ PC.

La résistance interfaciale de ce nouveau type de générateurs électrochimiques rechargeables demeure faible lors du stockage à long terme de la batterie au lithium, à la température ambiante. Cette résistance d'interface est obtenue avec la séquence décroissante suivante γ -BL< γ -BL + PC < γ-BL+ EC, (γ -BL) représentant la plus faible valeur et (γ-BL+ EC) représentant la plus forte valeur.

### Procédé de réticulation et fabrication de la batterie.

Les Figures 1 et 2 montrent le détail du procédé de fabrication d'une batterie au lithium par polymérisation *in situ* de l'électrolyte polymère par lampe infrarouge (optique) ou thermique.

Tel qu'illustré sur la Figure 2, trois films sont préparés simultanément par laminage. Le film de lithium métallique est préparé à partir d'un extrudât de lithium solide qui est laminé, optionnellement sur un film support d'électrode. Le film du séparateur est préparé à partir d'un extrudât de granules de polypropylène. Le film de la cathode est laminé, optionnellement sur un support. À la sortie des rouleaux (1), (2) et (3) de laminage, les trois films sont assemblés sous l'effet d'une pression exercée par les rouleaux (4) entre les différents films. On règle la distance entre les rouleaux pour qu'il reste des micro-espaces entre les différents. Ces micro-espaces sont remplies par la composition électrolytique réticulable. Le film multicouche est coupé dans la longueur désirée à l'aide d'un couteau non représenté sur la Figure 2 mais positionné à proximité du rouleau (5). Les sections du film multicouches ainsi obtenues sont imbibées successivement dans les bains (6) et (6') remplis du mélange polymère réticulable/solvant plastifiant/sel de lithium. Les sections imbibées ainsi préparées sont soudées à une extrémité par exemple à l'aide d'ulta-sons. Les générateurs ainsi assemblés sont soumis à une source infra rouge dans la zone de chauffage (8) . L'irradiation provoque la formation de l'électrolyte polymère gel à l'intérieur des cavités du générateur mais également à l'intérieur des porosités présentes dans les électrodes et dans le film séparateur. La température mesurée dans la zone d'exposition du générateur à la lumière infrarouge par la sonde de température (12) est ajustée avec celle mesurée par la sonde de température (11) indiquant la température de laminage du film de lithium. L'ajustement se fait à l'aide de la régulation de température (13). La réticulation est arrêtée lorsque l'électrolyte polymère gel a atteint la consistance d'un gel ce qui correspond à une valeur du degré de réticulation du polymère réticulable dans le mélange polymère réticulable/solvant plastifiant/sel de lithium comprise entre 5 et 40 %. Contrairement à un solvant traditionnel, le solvant plastifiant ne s'évapore substantiellement pas au cours de l'étape de réticulation et le solvant plastifiant reste emprisonné dans la structure électrolyte polymère gel pour contribuer à sa conductivité et à sa plasticité.

Les exemples ci-après présentés sont donnés à titre purement illustratif, et ne sauraient être interprétés comme constituant une quelconque limitation de l'objet revendiqué.

### EXEMPLE 1 - Batterie avec lithium métal et gel -Gel (E-BEAM)

Le procédé complet de préparation des films et d'assemblage du générateur correspondant ci-après utilisé est réalisé en continu dans une boite à gants avec régulations de température et sous argon, selon le schéma représenté dans la Figure 2.

La fabrication de l'extrudât de lithium métallique par extrusion est réalisé à 25° Celsius dans la boite à gants rendue anhydre.

La préparation du film de lithium métallique est réalisée par extrusion d'une barre de lithium métallique et l'extrudât obtenu d'une épaisseur d'environ 250 micromètres est soumis à un laminage pour résulter en un film continu d'une épaisseur d'environ 34 micromètres.

La fabrication de la cathode est réalisée à partir de LiFePO₄ et de noir de carbone mélangé avec le liant polyvinylidène fluoré (PVDF) commercialisé sous la marque de commerce Kruha : KF-1700™, dans le ratio massique 87:3:10 dans le solvant n-méthyl pyrolidone.

Ce mélange est appliqué sur un collecteur d'aluminium par la méthode Doctor Blade^{™}. L'électrode ainsi obtenue est séchée sous vide à 120° Celsius pendant 24 heures.

L'électrolyte polymère du type polymère à quatre branches commercialisé sous la marque de commerce ERM-1 ELEXCEL^{™} par la Société DKS lot 8K1201 est aussi préparé par Doctor Blade^{™} puis réticulé à l'aide d'Electron-beam. La cathode et le séparateur polymère sont d'abord imbibés dans le mélange à base de plastifiant 1,5M LiBF₄ dans EC/GBL (1 :3).

Le lithium métal est utilisé comme anode montée face à la cathode et séparé par le film de polymère.

On a pris soin de réaliser la réticulation du mélange polymère réticulable - plastifiant - sel de lithium à la même température que celle utilisée pour le laminage de l'extrudât de lithium métallique.

Ainsi une pile électrochimique de 4 cm² de surface, est obtenue.

La batterie est cyclée entre 2,5 et 4,0 Volts, à un régime de C/3. La Figure 3 montre le résultat du cyclage de la pile qui conserve une bonne stabilité de l'interface de lithium avec le polymère après 60 cycles.

### EXEMPLE 2 : configuration gel : batterie avec lithium métal comparée à une batterie Li-ion - Gel (thermique)

### A) batterie lithium métal

La cathode est préparée de la même façon que dans l'exemple 1. En particulier les températures d'extrusion du lithium métallique, de laminage de l'extrudât correspondant et de réticulation du mélange polymère/plastifiant/sel de lithium sont ajustées à une valeur de 25 ° Celsius.

L'anode est préparé à partir d'un graphite naturel sphérique mélangé avec le liant polyvinylidène fluoré (PVDF) (Kruha : KF-1700 ™) et la n-méthyl pyrolidone dans un ratio massique 90:10. Ce mélange est appliqué sur un collecteur de cuivre par la méthode du Doctor Brade^{™}. L'électrode de graphite ainsi obtenue est séchée sous vide à 120° Celsius pendant 24 heures.

L'électrolyte polymère est préparée à partir du mélange ERM-1 ELEXCEL^{™} (4 branches) de DKS lot 8K1201 avec 1,5 Moles de LiBF₄ dans EC/GBL (1 :3) de Tomiyama, dans lequel on ajoute 1000 ppm du thermoinitiateur Perkadox 16 ™ de la société Akzo Nobel.

La fabrication de l'anode est réalisée à l'aide d'un feuillard de lithium métallique de 40 µm d'épaisseur laminé sur un feuillard de cuivre métallique. Les prises de contacts négatives sont réalisées par ultrason (UL TRAWELD, AmTech Modèle 2000B™).

L'assemblage technologique de la batterie est réalisé par empilement des films anode Celgard® et cathode, suivant la séquence anode//Celgard//cathode.

Cette configuration est mise dans un sachet métal plastique et scellée. L'électrolyte polymère est injecté dans la cellule, puis un second scellage suit. La batterie est mise dans l'étuve à 25° Celsius pendant 48 heures pour une réticulation adéquate, ainsi le gel est formé *in-situ* et la batterie A est obtenue.

### B) batterie Li-ion

Ce type de batterie ne donne habituellement pas lieu à la formation de dendrites.

Une seconde batterie (B) est montée, de la même façon, également avec un contrôle de température, en remplaçant l'anode de lithium par une anode à base du graphite. L'anode est préparée par mélange du graphite sphérique avec le liant polyvinylidène fluoré (PVDF) (Kruha^{™} : KF-1700) et la n-méthyl pyrolidone, dans un ratio massique 90:10. Ce mélange est appliqué sur un collecteur de cuivre par la méthode du Doctor Blade^{™}. L'électrode de graphite ainsi obtenue est séchée sous vide à 120° Celsius pendant 24 heures

La validation électrochimique est basée sur le test de Ragone qui consiste à réaliser une série de cycles à différents régimes de décharge. La Figure 4 représente une comparaison des batteries A et B.

Les résultats obtenus montrent clairement que la capacité rechargeable atteinte est plus élevée pour la configuration avec lithium métal (batterie A) qu'avec la configuration lithium ion. Ceci est associé à une meilleure stabilité de l'interface gel avec le lithium métal.

### EXEMPLE 3 - mise en évidence de l'importance d'un contrôle de température laminage à 25 °Celsius et réticulation à 80 °Celsius

Le procédé mise en oeuvre est celui illustré dans la Figure 2. Le laminage de l'extrudât de lithium métallique est effectué à 25 ° Celsius.

L'électrolyte polymère gel est préparé à partir d'un mélange formé de 10 % du polymère à 4 branches ERM-1 ELECEL^{™} commercialisé par la société DKS et de 90 % de 1,5M LiFSI dans le mélange plastifiant EC+GBL (1:3) avec ajout de 2.000 ppm de l'agent d e réticulation utilisé dans l'exemple 1.

La cathode est constituée d'un film de LiFePO₄ et le séparateur est constitué d'un film de polyéthylène.

La réticulation du mélange polymère réticulable est réalisée à une température différente de celle imposée pendant l'étape de laminage, soit de 80° Celsius pendant 3 heures.

Les conditions de cyclage sont de 2,5 à 4 Volts, la décharge en C/3 et la charge en C/1.

La courbe de cyclage représentée dans la Figure 5 montre clairement une chute rapide de la capacité en fonction de la cyclabilité. De plus, l'efficacité a augmenté (> à 100 %), ce qui démontre une activité dendritique.

## Revendications

1. Générateur électrochimique rechargeable au lithium métallique comportant au moins une électrode de type lithium métallique et au moins une cathode séparée par un séparateur, chacun sous forme d'un film, ledit séparateur étant imprégné par un électrolyte polymère gel, ledit générateur étant **caractérisé en ce que** la face de l'électrode de type lithium métallique en regard de l'électrolyte porte un film de passivation formé de l'électrolyte polymère gel occupant l'espace entre les électrodes et le séparateur, ainsi que les porosités des matériaux formant les électrodes et le séparateur.

2. Générateur selon la revendication 1, **caractérisé en ce que** la cathode est constituée par un matériau choisi parmi LiFePO₄, LiCoO₂, LiNiO₂, Li₄Ti₅O₁₂, et leurs mélanges.

3. Générateur selon la revendication 1, **caractérisé en ce que** l'électrode de type lithium métallique est constituée d'un film de lithium métallique ou d'un d'alliage intermétallique riche en lithium.

4. Générateur selon la revendication 3, **caractérisé en ce que** l'alliage intermétallique est un alliage Li-Al, Li-acier, Li-Sn ou Li-Pb.

5. Générateur selon la revendication 1, **caractérisé en ce que** le séparateur est constitué par un polyéthylène, un polypropylène, un polyéther ou un mélange polyéthylène/polypropylène.

6. Générateur selon la revendication 1, **caractérisé en ce qu'**il comprend en outre au moins un additif de nature organique et/ou inorganique.

7. Générateur selon la revendication 6, **caractérisé en ce que** l'additif est une céramique ou un verre.

8. Générateur selon la revendication 6, **caractérisé en ce que** l'additif est choisi parmi les oxydes de titane, les oxydes d'aluminium et leurs mélanges, et **en ce que** la teneur de l'additif est inférieure à 10 % en poids.

9. Générateur selon la revendication 1, **caractérisé en ce que** l'électrolyte polymère gel contient un sel de lithium, choisi parmi LiBF₄, LiPF₆, LiTFSI, LiBETI, LIFSI et leurs mélanges.

10. Générateur selon la revendication 1, **caractérisé en ce que** :
- la cathode est constituée par un matériau choisi parmi LiFePO₄, LiCoO₂, LiNiO₂, Li₄Ti₅O₁₂, et leurs mélanges ;
- l'anode est constituée par du lithium métallique ou par un alliage intermétallique choisi parmi les alliages alliage Li-Al, Li-acier, Li-Sn ou Li-Pb ;
- l'électrolyte gel polymère contient un sel de lithium et un additif choisi parmi les oxydes de titane, les oxydes d'aluminium et leurs mélanges, et **en ce que** la teneur de l'additif est inférieure à 10 % en poids.

11. Procédé de préparation d'un générateur électrochimique rechargeable selon l'une quelconque des revendications 1 à 10, consistant à appliquer un film d'anode et un film de cathode sur un film séparateur, **caractérisé en ce que** :
- le film d'anode est obtenu par extrusion ou laminage de lithium ou d'un alliage intermétallique de lithium ;
- le film séparateur est un film de matériau polymère ;
- le film d'anode, le film séparateur et un film de cathode sont assemblés par colaminage ;
- le film séparateur est imprégné, avant ou après mise en contact avec le film d'anode et le film de cathode, par une composition d'électrolyte qui comprend un polymère réticulable et un sel de lithium, éventuellement au moins un additif et éventuellement un solvant plastifiant ;
- la composition d'électrolyte est soumise à une réticulation à une température comprise entre 20 et 90°C après l'assemblage avec le film d'anode et le film de cathode ;
- le laminage, l'extrusion et la réticulation sont réalisés sensiblement à la même température ;
- la composition d'électrolyte est réticulée *in situ,* après assemblage des parties constitutives du générateur et après remplissage de ses cavités par ladite composition d'électrolyte.

12. Procédé selon la revendication 11, **caractérisé en ce que** le polymère réticulable est un polymère à quatre branches.

13. Procédé selon la revendication 11, **caractérisé en ce que** la teneur en polymère réticulable dans la composition d'électrolyte est de 1 à 95 % en poids du mélange réticulable.

14. Procédé selon la revendication 11, **caractérisé en ce que** le sel de lithium de la composition d'électrolyte est choisi parmi LiBF₄, LiPF₆, LiTFSI, LiBETI, LIFSI et leurs mélanges.

15. Procédé selon la revendication 12, **caractérisé en ce que** la teneur en sel de lithium représente de 0,5 à 2,5 Molaire par rapport à la quantité du solvant plastifiant présent dans le mélange réticulable.

16. Procédé selon la revendication 11, **caractérisé en ce que** le solvant plastifiant est choisi parmi la γ-BL, la TESA, le PC, le EC et leurs mélanges.

17. Procédé selon la revendication 11, **caractérisé en ce que** la réticulation est effectuée en présence d'un peroxycarbonate en tant qu'agent de réticulation.

18. Procédé selon la revendication 11, **caractérisé en ce que** la réticulation est effectuée en présence de peroxyde de benzoyle.

19. Procédé selon la revendication 11, **caractérisé en ce que** la réticulation du est effectuée pendant une durée comprise entre 15 minutes et 72 heures.

20. Procédé selon la revendication 11, **caractérisé en ce que** la réticulation est effectuée à l'aide d'une irradiation par faisceau d'électrons, d'un rayonnement Ultra Violet, d'un rayonnement Infra Rouge ou thermique, ou d'une combinaison d'au moins deux de ces techniques.

21. Procédé selon la revendication 11, **caractérisé en ce que** la réticulation est effectuée à l'aide d'un faisceau d'électrons, sans addition d'agent de réticulation.

22. Procédé selon la revendication 11, **caractérisé en ce que** le film d'anode est préparé en milieu anhydre et/ou en présence d'un gaz rare.

23. Procédé selon la revendication 22, **caractérisé en ce que** les températures de laminage et d'extrusion sont maintenues sensiblement constantes pendant les étapes d'extrusion et de laminage

24. Procédé selon la revendication 11, **caractérisé en ce que** le film d'anode est obtenu par extrusion de lithium métallique et/ou d'un d'alliage intermétallique riche en lithium à une température comprise entre 50 et 100°C et le laminage est effectué à une température de 5 à 80°C.

25. Procédé selon la revendication 11, **caractérisé en ce que** l'écart entre la température à la sortie de l'extrusion et la température de réticulation est inférieur ou égal à 2°C..

26. Procédé selon la revendication 11, **caractérisé en ce que** la réticulation est effectuée par irradiation infrarouge ou par voie thermique, et en exerçant une pression sur les parois externes et/ou sur les interfaces internes du générateur en vue d'améliorer la soudure des interfaces internes.

27. Procédé selon la revendication 26, **caractérisé en ce que** la pression exercée varie de 689 Pa à 517.10³ Pa (0,1 PSI à 75 PSI).

28. Procédé selon la revendications 11, **caractérisé en ce que** :
- un film de lithium est préparé à partir de lithium et/ou d'un d'alliage intermétallique riche en lithium sous forme solide par une extrusion suivie d'un laminage ou par extrusion seulement;
- un deuxième film est préparé et appliqué sur un support d'électrode pour former une cathode; et éventuellement
- un film séparateur est préparé par laminage ou par Doctor Blade optionnellement sur un support.

29. Procédé e selon la revendication 28, **caractérisé en ce que** les trois films mentionnés sont préparés l'un après l'autre, dans un ordre indifférent, ou simultanément.

30. Procédé selon la revendication 11, réalisé en continu.

31. Utilisation d'un générateur selon l'une quelconque des revendications 1 à 10 ou tel qu'obtenu un procédé selon l'une quelconque des revendications 11 à 30 comme source de courant dans les véhicules hybrides électriques, dans les véhicules électriques ou dans des UPS.

32. Utilisation d'un générateur selon l'une quelconque des revendications 1 à 10 ou tel qu'obtenu un procédé selon l'une quelconque des revendications 11 à 30 en plein air à des températures inférieures à 0°C.

## Claims

1. Metallic lithium rechargeable electrochemical accumulator comprising at least one metallic lithium electrode and at least one cathode separated by an separator, each of them being in the form of a film, said separator being impregnated by a polymeric gel electrolyte, said accumulator being **characterized in that** the surface of the metallic lithium electrode which faces the electrolyte has a passivation film formed of the polymeric gel electrolyte which occupies the space between the electrodes and the separator and the porosity of the materials which form the electrodes and the separator.

2. An accumulator according to claim 1, **characterized in that** the cathode is made of a material selected from LiFePO₄, LiCoO₂, LiNiO₂, Li4TiO₁₂ and mixtures thereof.

3. An accumulator according to claim 1, **characterized in that** the metallic lithium electrode is made of metallic lithium film or of an intermetallic lithium rich alloy film.

4. An accumulator according to claim 3, **characterized in that** the intermetallic alloy is an Li-Al, Li-steel, Li-Sn or Li-Pb alloy.

5. An accumulator according to claim 1, **characterized in that** the separator is made of polyethylene, polypropylene, polyether or a polyethylene/polypropylene mixture.

6. An accumulator according to claim 1, **characterized in that** it further comprises at least one organic and/or inorganic additive.

7. An accumulator according to claim 6, **characterized in that** the additive is glass or a ceramic.

8. An accumulator according to claim 6, **characterized in that** the additive is selected from titanum oxides, aluminum oxides and mixtures thereof, and the additive content is less than 10% w/w.

9. An accumulator according to claim 1, **characterized in that** the polymeric gel electrolyte contains a lithium salt selected from LiBF₄, LiPF₆, LiTFSI, LiBETI, LIFSI and mixtures thereof.

10. An accumulator according to claim 1, **characterized in that**:
- the cathode is made of a material selected from LiFePO₄, LiCoO₂, LiNiO₂, Li₄TiO₁₂ and mixtures thereof;
- the anode is made of metallic lithium or an intermetallic alloy selected from Li-Al, Li-steel, Li-Sn or Li-Pb alloy;
- the polymer gel electrolyte contains a lithium salt and an additive selected from titanum oxides, aluminum oxides and mixtures thereof, and the additive content is less than 10% w/w.

11. A method for preparing a rechargeable electrochemical accumulator according to any of claims 1 to 10, consisting in applying an anode film and a cathode film on a separator, **characterized in that**:
- the anode film is obtained by extrusion or lamination of lithium or an intermetallic lithium alloy;
- the separator film is a polymer material film;
- the anode film, the separator film and the cathode film are assembled by colamination;
- the separator film is impregnated by an electrolyte composition which comprises a crosslinkable polymer, a lithium salt, optionally at least one additive and optionally a plastifying solvent, before or after being assembled with the anode film and the cathode film;
- the electrolyte composition is subjected to crosslinking at a temperature between 20 and 90°C after being assembled with the anode film and the cathode film;
- lamination, extrusion and crosslinking are carried out substantially at the same temperature;
- the electrolyte composition is crosslinked in situ, after the constituting parts of the accumulator are assembled and after filling the cavities thereof with said electrolyte composition.

12. The method according to claim 11, **characterized in that** the crosslinkable polymer is a four-branched polymer.

13. The method according to claim 11, **characterized in that** the amount of crosslinkable polymer content in the electrolyte composition is from 1 to 95% of the crosslinkable mixture weigth.

14. An accumulator according to claim 11, **characterized in that** the lithium salt of the electrolyte composition is selected from LiBF₄, LiPF₆, LiTFSI, LiBETI, LIFSI and mixtures thereof.

15. The method according to claim 12, **characterized in that** the lithium salt amount is 0.5 to 2.5 molar with respect to the quantity of plasticizing solvent present in the crosslinkable mixture.

16. The method according to claim 11, **characterized in that** the plasticizing solvent is selected from γ-BL, TESA, PC, EC and mixtures thereof.

17. The method according to claim 11, **characterized in that** crosslinking is carried out in the presence of a peroxycarbonate as the crosslinking agent.

18. The method according to claim 11, **characterized in that** crosslinking is carried out in the presence of benzoyl peroxide.

19. The method according to claim 11, **characterized in that** crosslinking is carried out over 15 minutes to 72 hours.

20. The method according to claim 11, **characterized in that** crosslinking is achieved by electron beam irradiation, ultraviolet rays, infrared rays, thermal route, or a combination of at least two of these techniques.

21. The method according to claim 11, **characterized in that** crosslinking is carried out by an electron beam irradiation, without addition of a crosslinking agent.

22. The method according to claim 11, **characterized in that** the anode film is prepared in an anhydrous medium and/or in the presence of a rare gas.

23. The method according to claim 22, **characterized in that** the lamination and extrusion temperatures are maintained substantially constant during the extrusion and lamination steps.

24. The method according to claim 11, **characterized in that** the anode film is obtained by extrusion of metallic lithium and/or a lithium-rich intermetallic alloy at a temperature between 50°C and 100°C and by lamination at a temperature ranging from 5°C to 80°C.

25. The method according to claim 11, **characterized in that** the temperature difference for the lamination and the extrusion steps is less than or equal to 2°C.

26. The method according to claim 11, **characterized in that** crosslinking is carried out via infrared irradiation or via thermal route, while exerting a pressure on the outer walls and/or the inner interfaces of the accumulator in order to improve the welding of the inner interfaces.

27. The method according to claim 26, **characterized in that** pressure exerted varies from 689 Pa to 517.10³ Pa (0.1 PSI to 75 PSI).

28. The method according to claim 11, **characterized in that**:
- a lithium film is prepared from lithium and/or a lithium rich intermetallic alloy in solid form via extrusion followed by lamination, or via extrusion only;
- a second film is prepared and applied on an electrode substrate to form a cathode; and optionally
- a separator film is prepared by lamination or by Doctor Blade optionally on a substrate.

29. The method according to claim 28, **characterized in that** the three mentioned films are prepared one after the other in any order, or simultaneously.

30. The method according to claim 11, carried out continuously.

31. Use of an accumulator according to any of claims 1 to 10 or such as obtained through a method according to any of claims 11 to 30 as a current source in electric hybrid vehicles, electric vehicles or in UPSs.

32. Use of an accumulator according to any of claims 1 to 10 or such as obtained through a method according to any of claims 11 to 30, outdoors at temperatures below 0°C.

## Patentansprüche

1. Wiederaufladbarer elektrochemischer Lithiummetall-Generator, umfassend zumindest eine Elektrode vom Lithiummetalltyp und zumindest eine mittels eines Separators davon getrennte Kathode, wobei die zumindest eine Elektrode, die zumindest eine Kathode und der Separator jeweils in Form eines Films vorliegen, wobei der Separator mit einem Polymergel-Elektrolyt imprägniert ist, wobei der Generator **dadurch gekennzeichnet ist, dass** die dem Elektrolyt zugewandte Seite der Elektrode vom Lithiummetalltyp einen Passivierungsfilm aufweist, der vom Polymergelelektrolyt gebildet wird, der den Raum zwischen den Elektroden und dem Separator sowie die Porenräume der Materialien ausfüllt, aus denen die Elektroden und der Separator bestehen.

2. Generator nach Anspruch 1, **dadurch gekennzeichnet, dass** die Kathode aus einem aus LiFePO₄, LiCoO₂, LiNiO₂, Li₄Ti₅O₁₂ und Gemischen davon ausgewählten Material besteht.

3. Generator nach Anspruch 1, **dadurch gekennzeichnet, dass** die Elektrode vom Lithiummetalltyp aus einem Film aus Lithiummetall oder einer lithiumreichen intermetallischen Legierung besteht.

4. Generator nach Anspruch 3, **dadurch gekennzeichnet, dass** die intermetallische Legierung eine Li-Al-, Li-Stahl-, Li-Sn- oder Li-Pb-Legierung ist.

5. Generator nach Anspruch 1, **dadurch gekennzeichnet, dass** der Separator aus einem Polyethylen, einem Polypropylen, einem Polyether oder einer Polyethylen/Polypropylen-Mischung besteht.

6. Generator nach Anspruch 1, **dadurch gekennzeichnet, dass** er weiters zumindest ein organisches und/oder anorganisches Additiv umfasst.

7. Generator nach Anspruch 6, **dadurch gekennzeichnet, dass** das Additiv ein Keramik- oder ein Glasmaterial ist.

8. Generator nach Anspruch 6, **dadurch gekennzeichnet, dass** das Additiv aus Titanoxiden, Aluminiumoxiden und Gemischen davon ausgewählt ist und dass der Additivgehalt weniger als 10 Gew.-% beträgt.

9. Generator nach Anspruch 1, **dadurch gekennzeichnet, dass** der Polymergel-elektrolyt ein aus LiBF₄, LiPF₆, LiTFSI, LiBETI, LiFSI und Gemischen davon ausgewähltes Lithiumsalz enthält.

10. Generator nach Anspruch 1, **dadurch gekennzeichnet, dass**:
- die Kathode aus einem aus LiFePO₄, LiCoO₂, LiNiO₂, Li₄Ti₅O₁₂ und Gemischen davon ausgewählten Material besteht;
- die Anode aus Lithiummetall oder einer aus Li-Al-, Li-Stahl-, Li-Sn- und Li-Pb-Legierungen ausgewählten intermetallischen Legierung besteht;
- der Polymergelelektrolyt ein Lithiumsalz und ein aus Titanoxiden, Aluminiumoxiden und Gemischen davon ausgewähltes Additiv enthält und dass der Additivgehalt weniger als 10 Gew.-% beträgt.

11. Verfahren zur Herstellung eines wiederaufladbaren elektrochemischen Generators nach einem der Ansprüche 1 bis 10, wobei das Verfahren darin besteht, einen Anodenfilm und einen Kathodenfilm auf einen Separatorfilm aufzubringen und **dadurch gekennzeichnet ist, dass**:
- der Anodenfilm durch Extrudieren oder Laminieren von Lithium oder einer intermetallischen Lithiumlegierung erhalten wird;
- der Separatorfilm ein Film aus Polymermaterial ist;
- der Anodenfilm, der Separatorfilm und der Kathodenfilm durch gemeinsames Laminieren verbunden werden;
- der Separatorfilm vor oder nach dem Kontaktieren mit dem Anodenfilm und dem Kathodenfilm mit einer Elektrolytzusammensetzung imprägniert wird, die ein vernetzbares Polymer und ein Lithiumsalz, gegebenenfalls zumindest ein Additiv und gegebenenfalls ein weichmachendes Lösungsmittel, umfasst;
- die Elektrolytzusammensetzung nach dem Verbinden mit dem Anodenfilm und dem Kathodenfilm bei einer Temperatur zwischen 20 und 90 °C vernetzt wird;
- das Laminieren, das Extrudieren und das Vernetzen im Wesentlichen bei derselben Temperatur durchgeführt werden;
- die Elektrolytzusammensetzung nach dem Verbinden der Bestandteile des Generators und nach dem Ausfüllen der Hohlräume mit der Elektrolytzusammensetzung in situ vernetzt wird.

12. Verfahren nach Anspruch 11, **dadurch gekennzeichnet, dass** das vernetzbare Polymer ein Polymer mit vier Verzweigungen ist.

13. Verfahren nach Anspruch 11, **dadurch gekennzeichnet, dass** der Gehalt an dem vernetzbaren Polymer in der Elektrolytzusammensetzung 1 bis 95 Gew.-% des vernetzbaren Gemischs beträgt.

14. Verfahren nach Anspruch 11, **dadurch gekennzeichnet, dass** das Lithiumsalz in der Elektrolytzusammensetzung aus LiBF₄, LiPF₆, LiTFSI, LiBETI, LiFSI und Gemischen davon ausgewählt ist.

15. Verfahren nach Anspruch 12, **dadurch gekennzeichnet, dass** der Gehalt an dem Lithiumsalz in Bezug auf die Menge des weichmachenden Lösungsmittels in dem vernetzbaren Gemisch 0,5 bis 2,5 auf molarer Basis beträgt.

16. Verfahren nach Anspruch 11, **dadurch gekennzeichnet, dass** das weichmachende Lösungsmittel aus γ-BL, TESA, PC, EC und Gemischen davon ausgewählt ist.

17. Verfahren nach Anspruch 11, **dadurch gekennzeichnet, dass** das Vernetzen in Gegenwart eines Peroxycarbonats als Vernetzungsmittel erfolgt.

18. Verfahren nach Anspruch 11, **dadurch gekennzeichnet, dass** das Vernetzen in Gegenwart von Benzoylperoxid erfolgt.

19. Verfahren nach Anspruch 11, **dadurch gekennzeichnet, dass** das Vernetzen in einem Zeitraum zwischen 15 min und 72 h erfolgt.

20. Verfahren nach Anspruch 11, **dadurch gekennzeichnet, dass** das Vernetzen durch Bestrahlen mit einem Elektronenstrahl, mit ultravioletter Strahlung, mit Infrarotstrahlung oder thermischer Strahlung oder durch eine Kombination zumindest zweier dieser Verfahren erfolgt.

21. Verfahren nach Anspruch 11, **dadurch gekennzeichnet, dass** das Vernetzen mittels Elektronenstrahl ohne Zusatz eines Vernetzungsmittels durchgeführt wird.

22. Verfahren nach Anspruch 11, **dadurch gekennzeichnet, dass** der Anodenfilm in einem wasserfreien Medium und/oder in Gegenwart eines Edelgases erfolgt.

23. Verfahren nach Anspruch 22, **dadurch gekennzeichnet, dass** die Laminations- und Extrusionstemperatur während der Schritte des Extrudierens und des Laminierens im Wesentlichen konstant gehalten wird.

24. Verfahren nach Anspruch 11, **dadurch gekennzeichnet, dass** der Anodenfilm durch die Extrusion von Lithiummetall und/oder einer lithiumreichen intermetallischen Legierung bei einer Temperatur zwischen 50 und 100 °C erhalten wird und das Laminieren bei einer Temperatur von 5 bis 80 °C durchgeführt wird.

25. Verfahren nach Anspruch 11, **dadurch gekennzeichnet, dass** der Temperaturunterschied zwischen der Temperatur nach dem Extrudieren und der Vernetzungstemperatur 2 °C oder weniger beträgt.

26. Verfahren nach Anspruch 11, **dadurch gekennzeichnet, dass** das Vernetzen durch Bestrahlung mit Infrarotstrahlung oder auf thermischem Weg und unter Ausübung von Druck auf die Außenwände und/oder die internen Grenzflächen des Generators erfolgt, um das Versiegeln der internen Grenzflächen zu verbessern.

27. Verfahren nach Anspruch 26, **dadurch gekennzeichnet, dass** der ausgeübte Druck zwischen 689 Pa und 517 x 10³ Pa (0,1 PSI bis 75 PSI) variiert.

28. Verfahren nach Anspruch 11, **dadurch gekennzeichnet, dass**:
- ein Lithiumfilm ausgehend von Lithium und/oder einer lithiumreichen intermetallischen Legierung in fester Form durch Extrusion gefolgt von Laminieren oder durch Extrusion alleine hergestellt wird;
- ein zweiter Film erzeugt und auf einen Elektrodenträger aufgebracht wird, um eine Kathode auszubilden, und gegebenenfalls
- ein Separatorfilm durch Laminieren oder ein Rakelverfahren, gegebenenfalls auf einem Träger, hergestellt wird.

29. Verfahren nach Anspruch 28, **dadurch gekennzeichnet, dass** die drei angeführten Filme einer nach dem anderen in beliebiger Reihenfolge oder gleichzeitig erzeugt werden.

30. Verfahren nach Anspruch 11, das kontinuierlich durchgeführt wird.

31. Verwendung eines Generators nach einem der Ansprüche 1 bis 10 oder wie erhalten durch ein Verfahren nach einem der Ansprüche 11 bis 30 als Stromquelle in elektrischen Hybridfahrzeugen, Elektrofahrzeugen oder für USV.

32. Verwendung eines Generators nach einem der Ansprüche 1 bis 10 oder wie erhalten durch ein Verfahren nach einem der Ansprüche 11 bis 30 im Freien bei Temperaturen unter 0 °C.
